# EUROPEAN PATENT SPECIFICATION

(11) **EP 4 502 769 B1**
(45) Date of publication and mention of the grant of the patent: **08.07.2026**
(21) Application number: 24192645.0
(22) Date of filing: 02.08.2024
(51) Int. Cl.: G06F 3/02, G06F 3/04886, A63B 71/06, A63B 22/06

(54) **DISPLAY UNIT FOR EXERCISE MACHINES**
ANZEIGEEINHEIT FÜR ÜBUNGSGERÄTE
UNITÉ D'AFFICHAGE POUR MACHINES D'EXERCICE

(30) Priority: 03.08.2023 IT 202300016680
(43) Date of publication of application: 05.02.2025
(73) Proprietor: Technogym S.p.A., 47521 Cesena (FC) (IT)
(72) Inventor: LISI, Ivan, 47521 CESENA (IT); ESCOBEDO FORERO, Camilo, 47521 CESENA (IT); FEDRIGA, Mario, 47521 CESENA (IT); PATELLA, Claudia, 47521 CESENA (IT); RASCHI, Luca, 47521 CESENA (IT)
(74) Representative: De Santis, Giovanni

(56) References cited:
- KR-Y1- 200 461 301
- US-A1- 2013 225 369
- US-A1- 2018 126 248
- US-A1- 2019 111 318
- US-B1- 6 447 424

## Description

The present invention relates to a display unit for exercise machines.

The use of devices or display units associated to exercise machines, such as treadmills, bikes, etc., is widely used and known in the art.

Said units are configured in such a way that the user is able to select the desired type of training session, for example uphill running, flat course, tempo run, distance running, etc., to set up and/or modify during execution one or more of the parameters of the selected session, such as duration, difficulty level, rhythm/speed, and to visualize the approximate values of the ongoing or finished performance.

Said units known in the art, while making it possible to adequately perform the services for which they were conceived, however present certain aspects which could be improved particularly regarding production simplicity and costs, ease of use, functional integrity in the presence of contaminating agents which can cause malfunction, such as drops of sweat, typical and inevitable during the performance of training sessions.

US 6447424 B1 discloses a display controller system for use with a selectively adjustable exercise apparatus. The system comprises a display device, a controller, and a selectively adjustable exercise device. The controller enables adjustments in the exercise apparatus according to a mountain exercise profile having trail workout segments that are digitally coded to enable the selectively adjustable exercise device. The mountain exercise profile may use topographical maps, GPS coordinates, or portable hike monitors to design the actual exercise program. A mountain exercise profile may also be obtained through an external interface located in the controller. The user can develop a virtual trail. These preprogrammed trail workouts are created by a trail workout designer who identifies the density of the trails and digitally codes the necessary adjustments for a specific exercise device. Once the mountain exercise profile has been selected, a motivational display panel provides segment length, vertical distance traveled, upcoming grade changes and total length traveled in one identifiable display panel.

KR 200461301 Y1, US 2018/126248 A1, US 2019/111318 A1 and US 2013/225369 A1 dislcose subject matter related to the present invention.

Therefore, object of the present invention is to provide a display unit for exercise machines which makes it possible to mitigate one or more of said aspects, and in particular which is easy to use and simple to produce with relatively low costs, and/or is able to contrast at least partly, if not annul completely, the negative effects of contaminating agents, especially drops of sweat, while in use.

This object, as well as others which will become more apparent from the following description, is reached by a display unit for exercise machines whose characteristics are defined in claim 1.

Particular embodiments are object of the respective dependent claims whose contents are intended as an integral part of the present description.

Further characteristics and advantages of the invention will become more apparent from the following detailed description of exemplary and non-limiting embodiments, and with reference to the attached drawings in which:
figure 1 is an exploded view which schematically illustrates a display unit for exercise machines according to the present invention;
figure 2 is a frontal view which schematically illustrates a portion of a capacitive keypad used in the display unit for exercise machines according to the invention;
figure 3 is a frontal view illustrating a plurality of keys represented graphically on the front screen of the display unit, in an embodiment according to the invention;
figure 4 illustrates a display unit for exercise machines mounted on the handlebars of a bike.

It should be noted that in the following detailed description the components illustrated in the figures are not necessarily to scale and certain characteristics of the description may be shown in a rather schematic form.

Furthermore, when the term "configured" or "shaped", or a similar term is used in the present context with reference to any component whatsoever as a whole, or any part whatsoever of a component, said term is intended as comprising correspondingly the structure and/or the configuration and/or the shape and/or the positioning of the component or part to which it refers.

In particular, when said terms refer to hardware or software electronic means they are intended as including circuits or parts of electronic circuits, as well as software/firmware, such as algorithms, routines and programs in general, in execution and/or resident in any storage medium whatsoever.

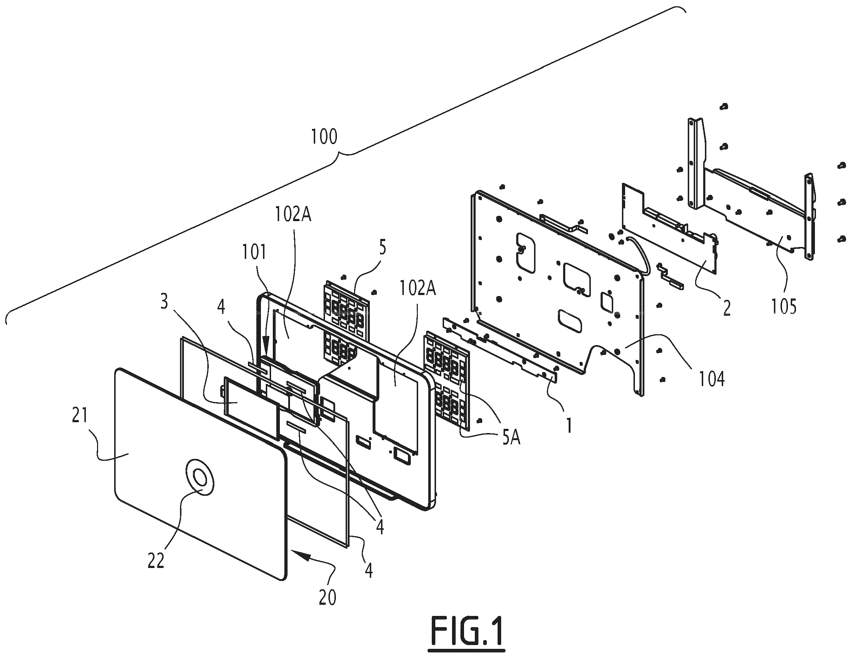

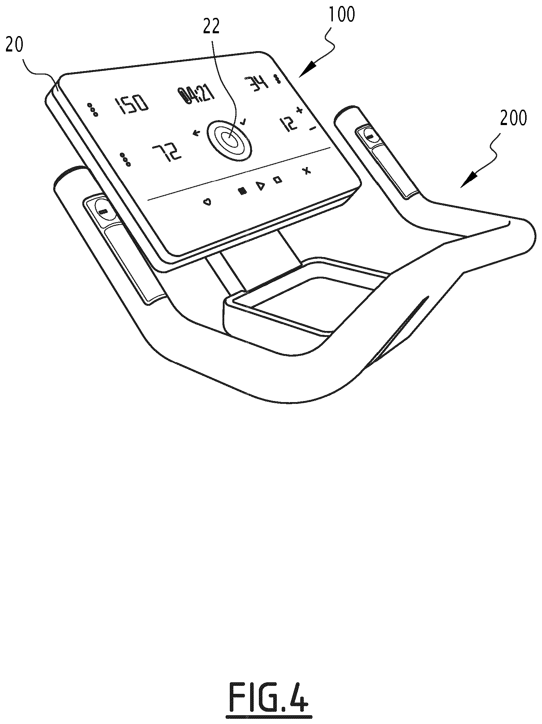

Figure 1 schematically illustrates an exemplary embodiment of a display unit for exercise machines according to the present invention, indicated with reference number 100, while figure 4 illustrates the display unit 100 mounted on the handlebars of a bike 200.

Clearly, the bike represents only an example of a possible exercise machine to which the display unit can be associated, and the display unit 100 according to the invention can be used with other exercise machines, for example treadmills, etc.

As illustrated, the display unit 100 comprises:
- at least one electronic control unit (or controller) 1;
- a first display 3, in particular a liquid-crystal display, for displaying at least one navigable menu comprising training sessions selectable and parameterizable by a user;
- at least a second display 5 suitable for displaying at least user-settable parameter values indicative of the operation of the exercise machine 200 during the execution of a user-selected training session or parameters relating to the results (or the user's performance data) at the end of the execution of the selected training session.

In the exemplary embodiment illustrated in figure 1, the display unit 100 comprises a further display 5A, hereinafter third display 5A, the two displays 5 and 5A being for example substantially structurally and functionally similar to each other.

The second display 5 and, when used the third display 5A, are for example LED displays.

The display unit 100 further comprises a control panel 20 which includes a capacitive keypad 30 and a screen or cover lens 21 (hereinafter simply screen 21), for example at least partially transparent, which is made for example of screen-printed glass and which is placed over the front of the capacitive keypad 30.

Usefully, on the at least partially transparent screen 21, there is provided, e.g. by means of milling, a groove 22 for guiding the navigation of the user within the navigable menu of training sessions.

Furthermore, on the screen 21 a plurality of keys 6, 7, 8, 9, 10, 11, 12, 13, 14, 15, 16, 17, 18 are graphically represented (hereinafter for descriptive simplicity indicated as "keys" or "graphic keys") each of which associable to a user-selectable function or command.

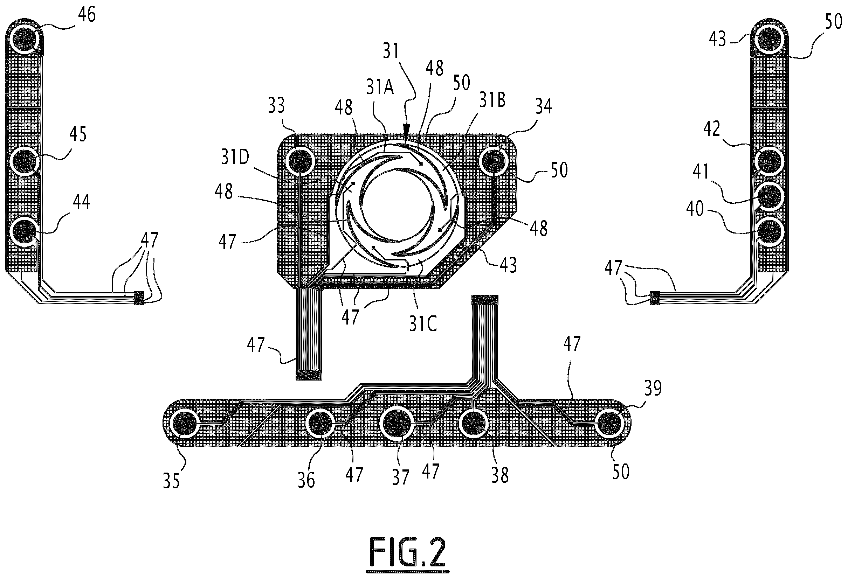

In particular, as illustrated in figure 2, the capacitive keypad 30 includes a first electrode 31, operatively associated to the groove 22, and a plurality of additional electrodes 33, 34, 35, 36, 37, 38, 39, 40, 41, 42, 43, 44, 45 operatively associable each to a key of said plurality of graphic keys 6, 7, 8, 9, 10, 11, 12, 13, 14, 15, 16, 17, 18 which are graphically represented on the screen 21.

The first electrode 31 and the plurality of additional electrodes 33, 34, 35, 36, 37, 38, 39, 40, 41, 42, 43, 44, 45 are each connected to the at least one electronic control unit 1 by means of corresponding electrically conductive tracks 47.

The number of graphic keys represented on the screen 21 can be appropriately varied depending on the exercise machine to which the display unit is to be associated and on the functions the exercise machine is to provide.

In particular, the display unit 100 conveniently comprises a capacitive keypad 30 common to all types of exercise machines so that said display unit can be used in accordance with the applications, changing the set of graphic keys represented on the screen 21.

Usefully, in an exemplary embodiment, the at least one electronic control unit 1 is configured to selectively inhibit operation of at least one electrode of said plurality of additional electrodes 33, 34, 35, 36, 37, 38, 39, 40, 41, 42, 43, 44, 45, 46, in particular when one of the keys is not graphically represented on the screen 21.

In practice, if for a specific exercise machine the use of a command or specific function is not foreseen, then the corresponding graphic key is not represented on the screen 21 and operation of the corresponding electrode on the capacitive keypad 30 can be inhibited via software, e.g. by means of the at least one electronic control unit 1.

In this way, if a user mistakenly touches an area of the screen 21 where no graphic key is represented, below said area there is in any case an electrode of the capacitive keypad 30 relative to the function of the non-represented key, but said error does not involve any reply from the display unit 100 by virtue of the inhibition procedure.

The functions/commands associated to the graphic keys can be functions relative to functions of the display unit 100 itself or associated to it, and the commands can be relative to actions to be transmitted to the exercise machine 200 itself.

Furthermore, one or more of the graphic keys, preferably all of them, are graphically represented by means of icons/symbols which symbolize the function/command associated to it.

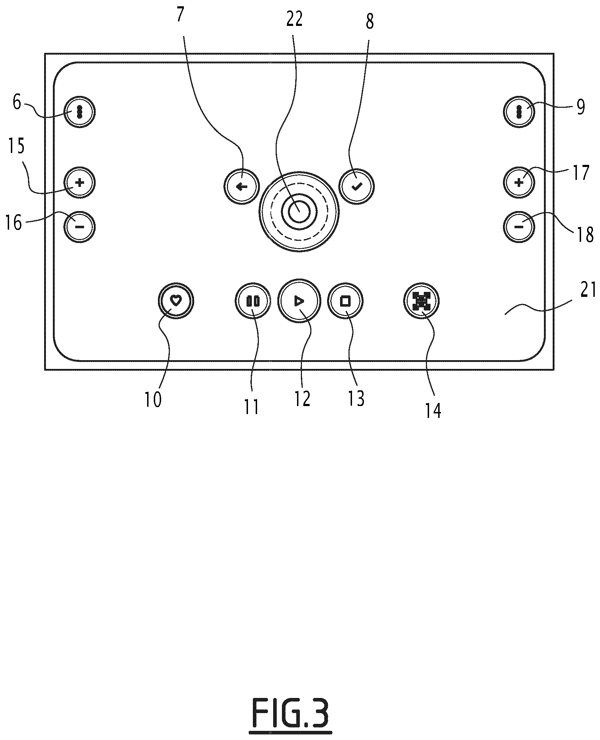

For example, in an embodiment, and as illustrated for example in figure 3, a first sub-group of keys 7 and 8 are visualized on the two sides of the groove 22 and are associated the first (key 7) to a function of return/cancellation with respect to a selection visualized on the first display 3 or possibly selected by the user, and the second (key 8) to confirmation of a selection identified by the groove 22 and visualized on the first display 3.

A second sub-group of keys, i.e. keys 10, 11, 12, 13 e 14, are visualized for example in a lower central area of the screen 21, and comprise a key 10 for managing connections with heart rate belts, a key 11 to transmit to the exercise machine 200 a pause command, a key 12 to transmit to the exercise machine 200 a start or re-start training session command, a key 13 to transmit to the exercise machine 200 a definitive stop command or to carry out a final cooling-down step and a key 14 for identification of the user on the exercise machine by means of an identification code or the connection with a personal device of the user, such as a smart-watch or smart-phone.

A third group of keys, i.e. keys 6, 15 and 16, 9 and 17 and 18, are visualized for example on the two sides of the screen 21. For example, the keys 6 and 9 are associated, by means of the respective electrodes of the underlying capacitive keypad 30, to the control unit for managing the data to be visualized on one or both displays 5 and 5A, while the keys 15 and 16 and 17 and 18 are associated to the visualization of training parameters which can be modified by a user acting on keys 15 or 17 (increase) and 16 or 19 (decrease) and whose values are visualized on the display 5 or the displays 5 and 5A during the training session.

In a possible embodiment, the capacitive keypad 30 can comprise a first dielectric layer, a conductive layer and a support layer. Between the various layers there may be protective layers and adhesive layers to guarantee functionality of the components.

The electrically conductive material used in the capacitive keypad 30 can be of different types, for example copper, indium-tin oxide, silver, etc.

In the display unit 100 according to the invention, the at least one electronic control unit 1 is configured to receive in input, from the capacitive keypad 30, a signal selectively indicative of the change in electric capacitance caused by the action of the user on the groove 22 or on one of the graphic keys 6, 7, 8, 9, 10, 11, 12, 13, 14, 15, 16, 17, 18 and to emit a corresponding command signal.

In particular, if a user has acted on the groove 22, the at least one electronic control unit 1 is configured to emit a corresponding command signal suitable to at least visualize on the display 3 the navigable menu of training sessions selected and parameterized by the user.

In particular, during the action by the user on the groove 22, the electronic control unit 1 continually processes the signal indicative of the change in capacitance caused by the action of the user, and enables gradual visualization of the navigable menu pages (which may also comprise various navigable sub-menus).

In a possible embodiment, the groove 22 and the associated first electrode 31 can be configured so as to implement also, by means of the electronic control unit 1, a function/command for the exercise machine.

If, however, the user has acted on one of the graphic keys, the at least one electronic control unit 1 is configured to emit a corresponding command signal suitable to implement a function/command associated to the graphic key on which the user has acted.

In correspondence with the actions of the user, the at least one electric control unit 1 is further configured to cause, during execution of the training session or when it finishes, visualization, on the first display 3, of the selected training session and, on the display 5 or on the second and third displays 5 and 5A correspondingly, of at least one or more operating parameters currently selected of the exercise machine or parameters relating to the user results at the end of the execution of the training session selected.

In practice, some graphic keys have the function of changing visualization, while others have the function of regulating the operating parameters of the machine. The latter also cause a change in visualization in the sense that the value of the operating parameter visualized is consequently updated.

For example, if the speed on a treadmill is increased by acting on the corresponding graphic key, the current speed value visualized is refreshed.

Conveniently, according to a possible embodiment which is both simple and effective, the display unit 100 comprises one or more layers or pieces 4 of bi-adhesive material configured to attach the display 3 and each LED display 5, 5A to the control panel 20.

In particular, the first and second displays 3 and 5 and, where used, also the third display 5A, are fixed, e.g. glued directly or indirectly to the rear side of the control panel, for example by means of one or more pieces of bi-adhesive material 4.

For example, as illustrated in figure 1, the first display 3 is inserted into a support 101, e.g. pocket-shaped, which is fixed to the control panel 20 by means of at least one piece of bi-adhesive so as to be as near as possible to the panel 20 itself.

In their turn, the second display 5 and when used the third display 5A, are connected to a support 102 which is fixed to the control panel 20A.

In the embodiment illustrated in figure 1, the second and third displays 5, 5A, are placed substantially symmetrically to each other on the sides of the first display 3 and are arranged in correspondence with two openings 102A provided for on the support 102.

Clearly, assembly of the various parts, and in particular fixing of each display 3, 5 and 5A can be carried out in a different manner, such as for example by mechanical fixing with screws, air bonding or optical bonding.

As illustrated in the embodiment in figure 1, the display unit 100 further comprises a rear metallic wall 104 and a support 105, for example also metallic, which, once assembled with the control panel 20 and all the components placed in between, substantially form the rear part of the display unit 100 itself.

In a possible embodiment, the capacitive keypad 30 is a self-capacitive keypad where for each graphic key 6, 7, 8, 9, 10, 11, 12, 13, 14, 15, 16, 17, 18 and for said groove 22, there is provided only one corresponding electrode.

In this case, while the display unit 100 is being used, for example the user's finger represents a second electrode when he "presses" a corresponding key, a variation in the capacitance of the system is generated and suitably processed by the at least one electronic control unit 1. More in detail, the electrode of the single button can be made with a single conductive element or with a plurality of conductive elements so as to obtain several signals and increase the reliability of detection of the contact with the user's finger.

This solution is particularly simple for efficient operation in the presence of drops of sweat.

Alternatively, the capacitive keypad 30 is a mutually capacitive keypad where for each graphic key 6, 7, 8, 9, 10, 11, 12, 13, 14, 15, 16, 17, 18 and for said groove 22 there is provided a corresponding pair of electrodes.

In this case, when the user's finger "presses" a key, the electric field between the two electrodes associated to said key varies, so changing the capacitive coupling.

In a further embodiment, the capacitive keypad is partly self capacitive and partly mutual capacitive.

In a possible embodiment, the display unit 100, and in particular its capacitive keypad 30, comprises a protective grid 50 arranged around the first electrode 31 and each electrode of the plurality of additional electrodes 33, 34, 35, 36, 37, 38, 39, 40, 41, 42, 43, 44, 45, 46.

Said grid 50 is, for example, made of strips of intersecting conductive material to form a grid and placed on a layer of dielectric material.

The grid 50 carries out a protective function limiting the emission of electromagnetic signals for the user, as well as the one of "security", determining the effective activation of a key, as opposed to "anomalous" situations.

In particular, if the user's finger is not exactly on the key but also partly on the grid, the at least one electronic control unit 1 is configured so as to detect this anomalous situation and not to consider the partial touch of the key as an effective selection of said key.

Another advantage associated to the grid is the detection of other "abnormal" situations, such as those caused by sweat; in fact, a drop of sweat would be able to vary the electric capacitance similarly to the touch of a finger.

In particular, in order to avoid a drop of sweat activating a key, the electronic control unit 1 is configured so as to interpret a signal indicative of capacitance change caused by the user acting on the groove 22 or on one of the graphic keys only if the capacitance variation takes place at a speed greater than a determined threshold.

In fact, if for example a drop of sweat falls on the grid 50 (or partly on the grid and partly on a key) and slides towards the area near a key, the algorithm implemented in the electronic control unit 1 is configured so that said capacitance change is not interpreted as a real touch of the key since the drop of sweat varies the capacitance gradually and not suddenly as would happen instead in the case of an effective touch of a finger.

Furthermore, the change in capacitance is proportional to the contact area; in the case where an object with conductivity characteristics (for example the metallic surface of a mobile phone) is placed on the screen 21, the fact that it covers several keys enables the control unit to exclude that what is taking place is due to the touch of a finger on a key.

In a possible embodiment, as illustrated in figures 1 and 2, the groove 22 and said first electrode 31 are ring-shaped and can be activated by the user by means of swiping a finger along the groove 22 or, alternatively, by pressing on a plurality of predetermined positions angularly spaced apart from each other along said groove.

In particular, according a possible embodiment illustrated in figure 2, the first electrode 31 is formed by a plurality of angular sectors, preferably four angular sectors 31A, 31B, 31C, 31D, which are made of electrically conductive material and are electrically separated two-by-two from each other by corresponding sections of dielectric material 48.

In this case, as illustrated in figure 2, each of the angular sectors 31A, 31B, 31C, 31D of electrically conductive material is connected to the first electronic control unit 1 by means of a corresponding electrically conductive track 47.

As illustrated in figure 2, each section of dielectric material 48 interrupts the electric continuity between an angular sector and the adjacent one and can be shaped, for example, like the curved tip of an arrow or an eagle's beak.

According to this embodiment, the at least one electronic control unit 1 is configured so as to receive in input said signal selectively indicative of the change in capacitance caused by the action of the user along the groove 22 corresponding to at least one angular sector of said plurality of angular sectors 31A, 31B, 31C, 31D and to convert the detected change in capacitance into a digital signal indicative of the corresponding angular position along the groove 22 where the user acted.

In this way, depending on the sector swiped by the user on the display 3, corresponding parts of the navigable menu are visualized on the first display 3, for example, one or more icons visualized in sequence and each relative to a selectable training session.

In a possible embodiment of the display 100 according to the invention, the at least one electronic control unit 1 is composed of a single electronic control unit or controller which is suitably configured to carry out the various functions described.

In a further possible embodiment, and as illustrated in figure 1, the at least one electronic control unit 1 comprises a first electronic control unit 1 (or first controller) and a second electronic control unit 2 (or second controller).

The first electronic control unit 1 is connected to the capacitive keypad 30 and to the second electronic control unit 2 and is dedicated mainly to controlling the capacitive keypad 30 and to processing the signals that it emits.

In particular, the first electronic control unit 1 is configured so as to receive in input from the capacitive keypad each signal selectively indicative of the change in capacitance caused by the user's action on the groove 22 or on one of the visualized graphic keys, and to emit a corresponding signal indicative of the action carried out by the user.

For example, said electronic control unit 1 comprises a suitable printed circuit board associated to a microcontroller which converts the analogue signals received from the capacitive keypad 30 into digital signals to supply them in input to the second electronic unit 2.

The second electronic control unit 2 is for example dedicated to actually controlling the exercise machine 200 and can also comprise a printed circuit board and an associated processor which carries out one or more software modules for the management logic of the functions relative to the various keys and to the groove 22.

In practice, the second electronic control unit 2 is configured so as to receive in input from said first electronic control unit 1 said corresponding digital signal and emit said corresponding command signal.

For example, if that which is processed by the first electronic control unit 1 is identified as an effective press on a key by the user, then this triggers the event connected to the pressed key and a message is sent to the second electronic control unit 2 where the relative operational flows are implemented for the emission of the command signal and any possible corresponding visualizations on the first display 3 and/or the second display 5 and/or the third display 5A.

Consequently, it is the second electronic control unit 2 that decides which action triggers that event on the display unit 100 or on the exercise machine and therefore what should be visualized on the first display 3 and/or on the display(s) 5, 5A, and/or if the exercise machine must for example start up, go into stand-by or stop.

In practice, when the user places himself on the exercise machine where the display unit 100 is installed and wants to carry out a training session, he starts by acting on the groove 22, for example swiping a finger along said groove 22 (or touching one of the predefined angular positions), so modifying the visualization on the display 3 and visualizing in sequence the possible training sessions available.

For example, the user may select, from the navigable menu on the display 3 which presents various icons each relative to a different session, a session with a time or alternatively a length objective and then confirm the choice with the key on the right (key 8) or go back by pressing the key on the left (key 7) if he chose the wrong session or changed his mind.

Once the desired training session has been selected, the user, acting on the groove 22, can modify one or more of its parameters; for example, if a time session has been selected, the length of time of the training session can be set to the value desired, and then confirmed by pressing the key 8 once more.

Furthermore, by acting on the various keys, the user can select one or more parameters that he wishes to visualize/modify.

The action on the graphic keys or on the groove 22 can be suitably accompanied by respective acoustic sounds or by tactile feedback implemented for example by the single electronic control unit 1 or by the second electronic control unit 2, if used.

Once the training session has been selected with the relative parameters, relating both to the selected session and to the operation of the exercise machine 200, the user selects the "play" button 12 and the exercise machine 200 starts up.

During said selections, the choices that are made, for example the selected session and/or the pre-set time, are graphically visualized on the first display 3, while the parameters set for the exercise machine are visualized on the second display 5 or correspondingly on both the second and third displays 5, 5A.

During the training session, the user can modify the exercise machine 200 settings, for example increasing or decreasing the value of a pre-set parameter.

For example, when the display unit 100 is associated to a treadmill, by acting on keys 15 and 16 the parameter "belt speed" can be increased or decreased, while by acting on keys 17 and 18 the parameter "belt inclination" can be increased or decreased.

Practically it has been established how the display unit 100 according to the invention reaches its intended scope in that it has a simple structure that can be produced at a relatively low cost, can be easily and intuitively operated by the user and where the negative effects of contaminating agents, especially drops of sweat, are mitigated.

Naturally, without prejudice to the scope of the invention, many variations and implementation details thereof may be applied to the above-described exemplary and non-limiting embodiments, without departing from the scope of protection of the invention as defined in the accompanying claims. For example, the screen 21 could be made of another material, the displays could use visualization modes and technologies different to those described above, etc.

## Claims

1. Display unit (100) for an exercise machine (200), comprising at least:
- at least one electronic control unit (1);
- a first display (3) configured to display at least one navigable menu comprising training sessions selectable and parameterizable by a user;
- at least a second display (5) configured to display at least user-settable parameter values indicative of the operation of the exercise machine (200) during the execution of a user-selected training session or parameters relating to the results at the end of the execution of the selected training session;
- a control panel (20) which includes:
- a screen (21) on which there is provided a groove (22) for guiding the navigation of the user within said navigable menu, and on which are graphically represented a plurality of keys (6, 7, 8, 9, 10, 11, 12, 13, 14, 15, 16, 17, 18) each of which associable with a user-selectable function or command;
- a capacitive keypad (30) including a first electrode (31) operably associated with said groove (22), and a plurality of additional electrodes (33, 34, 35, 36, 37, 38, 39, 40, 41, 42, 43, 44, 45, 46) operably associable each with a key of said plurality of keys, said first electrode (31) and said plurality of additional electrodes (33, 34, 35, 36, 37, 38, 39, 40, 41, 42, 43, 44, 45, 46) being connected each to said at least one electronic control unit (1) by corresponding electrically conductive tracks (47);
and wherein said at least one electronic control unit (1) is configured to receive in input a signal selectively indicative of the change in capacity caused by the action of the user on said groove (22) or on one of said keys and to emit a corresponding command signal configured for:
- displaying on the first display (3) said navigable menu of training sessions when the user has acted on the groove (22);
- implementing a function associated with the display unit (100) itself or imparting to the exercise machine (200) a command associated with the key on which the user has acted, said at least one electronic control unit (1) being configured to cause the first display (3) to show on the first display (3) the training session selected and on the second display (5) at least one or more operating parameters of the exercise machine currently selected or one or more parameters relating to the results at the end of the execution of the training session selected.

2. Display unit (100) according to claim 1, wherein said at least one electronic control unit (1) is configured to selectively inhibit operation of at least one electrode of said plurality of additional electrodes (33, 34, 35, 36, 37, 38, 39, 40, 41, 42, 43, 44, 45, 46).

3. Display unit (100) according to claim 1 or 2, wherein said capacitive keypad (30) is a self-capacitive keypad wherein for each key of said plurality of keys (6, 7, 8, 9, 10, 11, 12, 13, 14, 15, 16, 17, 18) and for said groove (22) there is provided only one corresponding electrode.

4. Display unit (100) according to claim 1 or 2, wherein said capacitive keypad (30) is a mutually capacitive keypad wherein for each graphic key (6, 7, 8, 9, 10, 11, 12, 13, 14, 15, 16, 17, 18) and for said groove (22) there is provided a corresponding pair of electrodes.

5. Display unit (100) according to one or more of the preceding claims, comprising a protective grid (50) arranged around the first electrode (31) and each electrode of said plurality of further electrodes (33, 34, 35, 36, 37, 38, 39, 40, 41, 42, 43, 44, 45, 46).

6. Display unit (100) according to one or more of the preceding claims, wherein said groove (22) and said first electrode (31) have an annular shape and are configured to be actuatable by the user by swiping along said groove (22) or by pressing on a plurality of predetermined positions angularly spaced apart from each other along said groove (22).

7. Display unit (100) according to claim 6, wherein said first electrode (31) comprises a plurality of angular sectors (31A, 31B, 31C, 31D) of electrically conductive material which are electrically separated two-by-two from each other by corresponding sections of dielectric material (48), each of the angular sectors of electrically conductive material being connected to said first electronic control unit (1) by a corresponding electrically conductive track (47).

8. Display unit (100) according to claim 7, wherein said first electrode (31) comprises four angular sectors of electrically conductive material which are electrically separated two by two from each other by four corresponding sections of dielectric material (48).

9. Display unit (100) according to claim 7 or 8, wherein said at least one electronic control unit (1) is configured to receive in input said signal selectively indicative of the change in capacitance caused by the action of the user along the groove (22) at at least one angular sector of said plurality of angular sectors and to convert the detected change in capacitance into a digital signal indicative of the corresponding angular position along the groove (22) where the user acted.

10. Display unit (100) according to one or more of the preceding claims, wherein said at least one electronic control unit (1) comprises:
- a first electronic control unit (1) which is configured to receive in input from the capacitive keypad (30) said signal selectively indicative of the change in capacitance caused by the action of the user on the groove (22) or on one of the graphic keys, and to output a corresponding digital signal indicative of the action performed by the user;
- a second electronic control unit (2) that is configured to receive in input from the first electronic control unit (1) said corresponding digital signal and emit said corresponding command signal.

11. Display unit (100) according to one or more of the preceding claims, comprising at least one layer or piece (4) of bioadhesive material configured to attach at least one of said first display (3) and second display (5) to the control panel (20).

## Patentansprüche

1. Anzeigeeinheit (100) für ein Trainingsgerät (200), umfassend mindestens:
- mindestens eine elektronische Steuereinheit (1);
- eine erste Anzeige (3), das konfiguriert ist, um mindestens ein navigierbares Menü anzuzeigen, umfassend Trainingseinheiten, die von einem Benutzer auswählbare und parametrisierbar sind;
- mindestens eine zweite Anzeige (5), die konfiguriert ist, um mindestens von einem Benutzer einstellbare Parameterwerte anzuzeigen, die indikativ für den Betrieb des Trainingsgeräts (200) während der Ausführung einer von dem Benutzer ausgewählten Trainingseinheit oder eines Parameters in Bezug auf die Resultate am Ende der Ausführung der ausgewählten Trainingseinheit sind;
- ein Bedienfeld (20), das Folgendes beinhaltet:
- einen Bildschirm (21), auf dem eine Rille (22) zum Führen der Navigation des Benutzers innerhalb des navigierbaren Menüs bereitgestellt ist und auf dem eine Vielzahl von Tasten (6, 7, 8, 9, 10, 11, 12, 13, 14, 15, 16, 17, 18) grafisch dargestellt sind, wovon jede mit einer von dem Benutzer auswählbaren Funktion oder einem Befehl assoziierbar ist;
- ein kapazitives Tastenfeld (30), das eine erste Elektrode (31), die funktionsfähig mit der Rille (22) assoziiert ist, und eine Vielzahl von zusätzlichen Elektroden (33, 34, 35, 36, 37, 38, 39, 40, 41, 42, 43, 44, 45, 46), die funktionsfähig jeweils mit einer Taste der Vielzahl von Tasten assoziierbar sind, beinhaltet, wobei die erste Elektrode (31) und die Vielzahl von zusätzlichen Elektroden (33, 34, 35, 36, 37, 38, 39, 40, 41, 42, 43, 44, 45, 46) jeweils durch entsprechende elektrisch leitende Bahnen (47) mit der mindestens einen elektronischen Steuereinheit (1) verbunden sind;
und wobei die mindestens eine elektronische Steuereinheit (1) konfiguriert ist, um als Eingang ein Signal zu empfangen, das selektiv indikativ für die Änderung der Kapazität ist, die durch die Aktion des Benutzers an der Rille (22) oder einer der Tasten verursacht wird, und um ein entsprechendes Befehlssignal auszugeben, das zu Folgendem konfiguriert ist:
- Anzeigen, auf der ersten Anzeige (3), des navigierbaren Menüs der Trainingseinheiten, wenn der Benutzer an der Rille (22) agiert hat;
- Implementieren einer Funktion, die mit der Anzeigeeinheit (100) an sich assoziiert ist, oder Erteilen dem Trainingsgerät (200) eines Befehls, der mit der Taste assoziiert ist, an der der Benutzer agiert hat, wobei die mindestens eine elektronische Steuereinheit (1) konfiguriert ist, um die erste Anzeige (3) zu veranlassen, auf der ersten Anzeige (3) die gewählte Trainingseinheit und auf der zweiten Anzeige (5) mindestens einen oder mehrere Betriebsparameter des aktuell gewählten Trainingsgeräts oder einen oder mehrere Parameter in Bezug auf die Resultate am Ende der Ausführung der gewählten Trainingseinheit anzuzeigen.

2. Anzeigeeinheit (100) nach Anspruch 1, wobei die mindestens eine elektronische Steuereinheit (1) konfiguriert ist, um selektiv einen Betrieb von mindestens einer Elektrode der Vielzahl der zusätzlichen Elektroden (33, 34, 35, 36, 37, 38, 39, 40, 41, 42, 43, 44, 45, 46) zu sperren.

3. Anzeigeeinheit (100) nach Anspruch 1 oder 2, wobei das kapazitive Tastenfeld (30) ein selbst-kapazitives Tastenfeld ist, wobei für jede Taste der Vielzahl von Tasten (6, 7, 8, 9, 10, **11,** 12, 13, 14, 15, 16, 17, 18) und für die Rille (22) nur eine entsprechende Elektrode bereitgestellt ist.

4. Anzeigeeinheit (100) nach Anspruch 1 oder 2, wobei das kapazitive Tastenfeld (30) ein wechselseitig kapazitives Tastenfeld ist, wobei für jede grafische Taste (6, 7, 8, 9, 10, 11, 12, 13, 14, 15, 16, 17, 18) und für die Rille (22) ein entsprechendes Paar von Elektroden bereitgestellt ist.

5. Anzeigeeinheit (100) nach einem oder mehreren der vorherigen Ansprüche, umfassend ein Schutzgitter (50), das um die erste Elektrode (31) und jede Elektrode der Vielzahl von weiteren Elektroden (33, 34, 35, 36, 37, 38, 39, 40, 41, 42, 43, 44, 45, 46) angeordnet ist.

6. Anzeigeeinheit (100) nach einem oder mehreren der vorherigen Ansprüche, wobei die Rille (22) und die erste Elektrode (31) eine ringförmige Form aufweisen und konfiguriert sind, um von dem Benutzer durch Wischen entlang der Rille (22) oder durch Drücken an einer Vielzahl von vorbestimmten Positionen, die winkelmäßig entlang der Rille (22) voneinander beabstandet sind, betätigbar sind.

7. Anzeigeeinheit (100) nach Anspruch 6, wobei die erste Elektrode (31) eine Vielzahl von winkelförmigen Sektoren (31A, 31B, 31C, 31D) aus elektrisch leitendem Material umfasst, die durch entsprechende Abschnitte aus dielektrischem Material (48) paarweise elektrisch voneinander getrennt sind, wobei jeder der winkelförmigen Sektoren aus elektrisch leitendem Material durch eine entsprechende elektrisch leitende Bahn (47) mit der ersten elektronischen Steuereinheit (1) verbunden ist.

8. Anzeigeeinheit (100) nach Anspruch 7, wobei die erste Elektrode (31) vier winkelförmige Sektoren aus elektrisch leitendem Material umfasst, die durch vier entsprechende Abschnitte aus dielektrischem Material (48) paarweise elektrisch voneinander getrennt sind.

9. Anzeigeeinheit (100) nach Anspruch 7 oder 8, wobei die mindestens eine elektronische Steuereinheit (1) konfiguriert ist, um als Eingang das Signal zu empfangen, das selektiv indikativ für die Änderung der Kapazität ist, die durch die Aktion des Benutzers entlang der Rille (22) in mindestens einem winkelförmigen Sektor der Vielzahl von winkelförmigen Sektor verursacht wird, und um die erfasste Änderung der Kapazität in ein digitales Signal umzuwandeln, das indikativ für die entsprechende Winkelposition entlang der Rille (22) ist, in der der Benutzer agiert hat.

10. Anzeigeeinheit (100) nach einem oder mehreren der vorherigen Ansprüche, wobei die mindestens eine elektronische Steuereinheit (1) Folgendes umfasst:
- eine erste elektronische Steuereinheit (1), die konfiguriert ist, um als Eingang von der kapazitiven Tastatur (30) das Signal zu empfangen, das selektiv indikativ für die Änderung der Kapazität ist, die durch die Aktion des Benutzers an der Rille (22) oder an einer der grafischen Tasten verursacht wird, und um ein entsprechendes digitales Signal auszugeben, das indikativ für Aktion ist, die von dem Benutzer durchgeführt wird;
- eine zweite elektronische Steuereinheit (2), die konfiguriert ist, um als Eingang von der ersten elektronischen Steuereinheit (1) das entsprechende digitale Signal zu empfangen und das entsprechende Befehlssignal auszugeben.

11. Anzeigeeinheit (100) nach einem oder mehreren der vorherigen Ansprüche, umfassend mindestens eine Schicht oder ein Stück (4) aus bioadhäsivem Material, das konfiguriert ist, um mindestens eine von der ersten Anzeige (3) und der zweiten Anzeige (5) an der Steuertafel (20) anzubringen.

## Revendications

1. Unité d'affichage (100) d'un appareil d'exercice (200), comprenant :
- au moins une unité de commande électronique (1) ;
- un premier écran (3) configuré pour afficher au moins un menu navigable comprenant des séances d'entraînement pouvant être choisies et paramétrées par un utilisateur ;
- au moins un deuxième écran (5) configuré pour afficher au moins des valeurs de paramètres réglables par l'utilisateur, indiquant le fonctionnement de l'appareil d'exercice (200) pendant l'exécution d'une séance d'entraînement choisie par l'utilisateur, ou des paramètres relatifs aux résultats à la fin de la réalisation de la séance d'entraînement choisie ;
- un panneau de commande (20) comprenant :
- un écran (21) sur lequel est prévue une rainure (22) permettant de guider l'utilisateur dans ledit menu navigable, et sur lequel sont représentées graphiquement plusieurs touches (6, 7, 8, 9, 10, 11, 12, 13, 14, 15, 16, 17, 18), chacune pouvant être associée à une fonction ou à une commande sélectionnable par l'utilisateur ;
- un clavier capacitif (30) comprenant une première électrode (31) associée de manière fonctionnelle à ladite rainure (22), et une pluralité d'électrodes supplémentaires (33, 34, 35, 36, 37, 38, 39, 40, 41, 42, 43, 44, 45, 46) pouvant être associées de manière fonctionnelle chacune à une touche de ladite pluralité de touches, ladite première électrode (31) et ladite pluralité d'électrodes supplémentaires (33, 34, 35, 36, 37, 38, 39, 40, 41, 42, 43, 44, 45, 46) étant chacune reliée à ladite au moins une unité de commande électronique (1) par des trajets conducteurs électriques correspondants (47) ;
et dans lequel ladite au moins une unité de commande électronique (1) est configurée pour recevoir en entrée un signal indiquant de manière sélective la variation de capacité provoquée par l'action de l'utilisateur sur ladite rainure (22) ou sur l'une desdites touches, et pour émettre un signal de commande correspondant configuré pour :
- afficher sur le premier écran (3) ledit menu navigable des séances d'entraînement lorsque l'utilisateur a actionné la rainure (22) ;
- mettre en œuvre une fonction associée à l'unité d'affichage (100) elle-même ou transmettre à l'appareil d'exercice (200) une commande associée à la touche sur laquelle l'utilisateur a appuyé, ladite au moins une unité de commande électronique (1) étant configurée pour amener le premier écran (3) à afficher sur le premier écran (3) la séance d'entraînement sélectionnée et sur le deuxième écran (5) au moins un ou plusieurs paramètres de fonctionnement de l'appareil d'exercice en cours d'utilisation ou un ou plusieurs paramètres relatifs aux résultats à la fin de la séance d'entraînement sélectionnée.

2. Unité d'affichage (100) selon la revendication 1, dans laquelle au moins une unité de commande électronique (1) est configurée pour désactiver de manière sélective le fonctionnement d'au moins une électrode parmi ladite pluralité d'électrodes supplémentaires (33, 34, 35, 36, 37, 38, 39, 40, 41, 42, 43, 44, 45, 46).

3. Unité d'affichage (100) selon la revendication 1 ou 2, dans laquelle ledit clavier capacitif (30) est un clavier auto-capacitif dans lequel, pour chacune des touches de ladite pluralité de touches (6, 7, 8, 9, 10, 11, 12, 13, 14, 15, 16, 17, 18) et pour ladite rainure (22), il est prévu une seule électrode correspondante.

4. Unité d'affichage (100) selon la revendication 1 ou 2, dans laquelle ledit clavier capacitif (30) est un clavier capacitif mutuel dans lequel, pour chaque touche graphique (6, 7, 8, 9, 10, 11, 12, 13, 14, 15, 16, 17, 18) et pour ladite rainure (22), il est prévu une paire d'électrodes correspondante.

5. Unité d'affichage (100) selon une ou plusieurs des revendications précédentes, comprenant une grille de protection (50) disposée autour de la première électrode (31) et de chacune des électrodes de ladite pluralité d'électrodes supplémentaires (33, 34, 35, 36, 37, 38, 39, 40, 41, 42, 43, 44, 45, 46).

6. Unité d'affichage (100) selon une ou plusieurs des revendications précédentes, dans laquelle ladite rainure (22) et ladite première électrode (31) ont une forme annulaire et sont configurées pour être actionnables par l'utilisateur soit en effectuant un balayage le long de ladite rainure (22), soit en appuyant sur une pluralité de positions prédéterminées espacées de manière angulaire les unes des autres le long de ladite rainure (22).

7. Unité d'affichage (100) selon la revendication 6, dans laquelle ladite première électrode (31) comprend une pluralité de secteurs angulaires (31A, 31B, 31C, 31D) en matériau conducteur d'électricité qui sont séparés électriquement deux à deux les uns des autres par des sections correspondantes de matériau diélectrique (48), chacun des secteurs angulaires en matériau conducteur d'électricité étant relié à ladite première unité de commande électronique (1) par un trajet conducteur électrique correspondant (47).

8. Unité d'affichage (100) selon la revendication 7, dans laquelle ladite première électrode (31) comprend quatre secteurs angulaires en matériau conducteur d'électricité qui sont séparés électriquement deux à deux les uns des autres par quatre sections correspondantes en matériau diélectrique (48).

9. Unité d'affichage (100) selon la revendication 7 ou 8, dans laquelle ladite au moins une unité de commande électronique (1) est configurée pour recevoir en entrée ledit signal indiquant de manière sélective la variation de capacité provoquée par l'action de l'utilisateur le long de la rainure (22) au niveau d'au moins un secteur angulaire parmi ladite pluralité de secteurs angulaires, et pour convertir la variation de capacité détectée en un signal numérique indiquant la position angulaire correspondante le long de la rainure (22) où l'utilisateur a agi.

10. Unité d'affichage (100) selon une ou plusieurs des revendications précédentes, dans laquelle ladite au moins une unité de commande électronique (1) comprend :
- une première unité de commande électronique (1) configurée pour recevoir en entrée, depuis le clavier capacitif (30), ledit signal indiquant de manière sélective la variation de capacité provoquée par l'action de l'utilisateur sur la rainure (22) ou sur l'une des touches graphiques, et pour émettre un signal numérique correspondant indiquant l'action effectuée par l'utilisateur ;
- une deuxième unité de commande électronique (2) configurée pour recevoir en entrée, depuis la première unité de commande électronique (1), ledit signal numérique correspondant et pour émettre ledit signal de commande correspondant.

11. Unité d'affichage (100) selon une ou plusieurs des revendications précédentes, comprenant au moins une couche ou une pièce (4) de matériau bioadhésif conçue pour fixer au moins l'un desdits premier écran (3) et deuxième écran (5) au panneau de commande (20).
